# EUROPÄISCHE PATENTSCHRIFT

(11) **EP 3 525 642 B1**
(45) Veröffentlichungstag und Bekanntmachung des Hinweises auf die Patenterteilung: **10.04.2024**
(21) Anmeldenummer: 17784635.9
(22) Anmeldetag: 16.10.2017
(51) Int. Cl.: A47K 5/12

(54) **BEHÄLTERAUFNAHMEVORRICHTUNG FÜR EINEN ABGABEBEHÄLTER**
ACCOMMODATING MEANS FOR A DISPENSING CONTAINER
DISPOSITIF RECEVANT UN RÉCIPIENT POUR RÉCIPIENT DISTRIBUTEUR

(30) Priorität: 14.10.2016 DE 102016119609
(43) Veröffentlichungstag der Anmeldung: 21.08.2019
(73) Patentinhaber: Bode Chemie GmbH, 22525 Hamburg (DE)
(72) Erfinder: LANGLOTZ, Christian, 20253 Hamburg (DE); KUBOTEIT, Stefan, 21220 Seevetal (DE)
(74) Vertreter: DREISS Patentanwälte PartG mbB
(86) Internationale Anmeldenummer: PCT/EP2017/076306
(87) Internationale Veröffentlichungsnummer: WO 2018/069544

(56) Entgegenhaltungen:
- DE-A1- 19 628 172
- US-A- 3 032 081
- US-A- 4 667 854
- US-A1- 2012 286 120
- US-B1- 6 325 245

## Beschreibung

Die Erfindung betrifft eine Behälteraufnahmevorrichtung für einen Abgabebehälter, wie insbesondere Spender für flüssige Medien, mit einem Gehäuse umfassend vier Seitenwände und einem Gehäuseboden zur Aufnahme des Abgabebehälters sowie einem Gehäusedeckel, wobei die Behälteraufnahmevorrichtung eine Sicherungseinrichtung für den Abgabebehälter aufweist.

Derartige Behälteraufnahmevorrichtungen sind im Stand der Technik bekannt und können beispielsweise freistehend vorgesehen sein oder an Befestigungsoberflächen, wie beispielsweise Wänden oder Konsolen, festlegbar sein, insbesondere lösbar festlegbar sein.

Eine entsprechende Vorrichtung ist beispielsweise in der DE 10 2011 115 712 B3 beschrieben. Bei dieser Behälteraufnahmevorrichtung ist der eigentliche Spender, wobei es sich bei derartigen Spendern beispielsweise um Abgabevorrichtungen für Seife oder auch Desinfektionsmittel oder ähnliches handeln kann, in einem Aufnahmebehälter aufgenommen, der an einer Tragkonsole gegen Entwendung gesichert festgelegt werden kann. Mittels der Tragkonsole kann die Behälteraufnahmevorrichtung beispielsweise an einer Wand festgelegt werden. Darüber hinaus weist der Stand der Technik Entnahmeverhinderungsmittel auf, welche eine Entnahme des eigentlichen Spenders bei montiertem Aufnahmebehälter verhindern sollen. Hierzu ist eine Bodenplatte vorgesehen, die ein Herausziehen der Flasche verhindert, solange der Aufnahmebehälter an der Tragekonsole befestigt ist. Der Austausch eines Abgabebehälters wie eines Spenders ist daher vergleichsweise aufwändig.

Weitere Behälteraufnahmevorrichtungen sind beispielsweise aus der US 6,131,773 vorbekannt, bei der ein Seifenspender an einer Rückplatte über eine Riegelplatte festgelegt werden kann, indem eine Abdeckung über den Spender gegen ungewolltes Entfernen gesichert ist und die Abdeckung durch Betätigung eines versteckten Mechanismus von der Rückplatte abgenommen und so der Spender selbst entfernt werden kann.

Des Weiteren ist aus der EP 30113202 A1 eine Entnahmeverhinderung für Spenderflaschen bekannt, wobei der Spender in einem Halsbereich der Spenderflasche umgriffen wird und so ein Entnehmen der Flasche aus der Behälteraufnahmevorrichtung verhindert ist. Dabei ist ein Schlüssel notwendig, um die Blockierung aufzuheben. Generell ist es nachteilig, sofern Schlüssel vorgesehen sein müssen, um einen Abgabebehälter in der Behälteraufnahmevorrichtung zu sichern, da derartige Schlüssel dann vom Personal in entsprechenden Einrichtungen wie Krankenhäusern oder Pflegeheimen, die mit dem Wechsel und mit dem Nachfüllen der Abgabebehälter betraut sind, mitgeführt werden müssen, oder solche Schlüssel zum Verschließen von Behälteraufnahmevorrichtungen oder anderen Sicherungseinrichtungen aus Bequemlichkeit gleich an der Behälteraufnahmevorrichtung verbleiben, so dass der Effekt konterkariert ist.

US 6 325 245 B1 offenbart eine Behälteraufnahmevorrichtung gemäss dem Oberbegriff des Anspruchs 1.

Derartige Abgabebehälter, insbesondere Spender für flüssige Medien, werden im Wesentlichen in zwei Varianten ausgebildet, nämlich zum einen so, dass die Abgabeöffnung in der Gebrauchsposition oben am Behälter angeordnet ist oder wahlweise, dass die Abgabeöffnung in der Gebrauchsposition unten am Behälter angeordnet ist, wobei die Richtungen oben und unten sowie vertikal und horizontal im Folgenden die übliche Gebrauchslage oder den Betriebszustand und die übliche Anordnung beschreiben. Dabei ist es in der Regel vorgesehen, dass eine Behälteraufnahmevorrichtung immer wieder neu mit einem Abgabebehälter versehen werden kann. Der Abgabebehälter kann dabei vorzugsweise ein Spender für flüssige Medien sein, der entweder bereits mit einer Pumpe versehen ist oder gemeinsam mit der Pumpe entsorgt wird oder bei dem die Pumpe als Mehrwegartikel ausgebildet ist, die, nachdem der Abgabebehälter entleert ist, entnommen wird, vorzugsweise aufbereitet wird, und dann mit einem weiteren Abgabebehälter zusammen montiert wieder in die Behälteraufnahmevorrichtung gegeben wird.

Dabei ist es wünschenswert, wenn entsprechende Abgabebehälter nicht durch unbefugtes Personal entnommen werden können.

Die Erfindung löst diese Aufgabe durch eine Behälteraufnahmevorrichtung mit den Merkmalen des Anspruchs 1.

Die Behälteraufnahmevorrichtung weist dabei eine Sicherungseinrichtung auf, die einen Riegel umfasst, der zwischen einer Freigabestellung und einer Sperrstellung bewegbar, insbesondere verschwenkbar ist, wobei der Riegel in der Sperrstellung in einen Bereich oberhalb einer Wandung eines in der Behälteraufnahmevorrichtung befindlichen Abgabebehälters hineinbewegt, insbesondere verschwenkt ist, so dass der Abgabebehälter gegen Entnehmen aus der Behälteraufnahmevorrichtung gesichert ist und in der Freigabestellung aus dem Bereich herausbewegt, insbesondere verschwenkt ist.

Die Aufnahmebehälter sind vorzugsweise Spender für Produkte, die als Flüssigkeit, insbesondere als viskose Flüssigkeit, als Gel, als Emulsion oder als Schaum appliziert werden und geeignet sind zur Reinigung, Pflege und/oder Desinfektion von Gegenständen und/oder Flächen beziehungsweise zur Reinigung, Pflege und/oder Desinfektion von Händen und/oder Hautarealen von Menschen und Tieren. Die Aufnahmebehälter sind besonders bevorzugt Spender für Handdesinfektionsmittel, insbesondere Spender für alkoholische Handdesinfektionsmittel.

Über die bewegliche Riegelplatte, die in einer Betriebslage vertikal nach oben oder unten geschoben werden kann, kann der Riegel verschwenkt werden zwischen einer Sperrstellung oder einer Freigabestellung, wobei der Riegel in der Sperrstellung so angeordnet ist, dass er in einen Bereich einschwenkt, der bei vertikal nach oben vorgesehener Entnahmerichtung des Abgabebehälters in einen Bereich oberhalb einer Wandung des Abgabebehälters vorgesehen ist und so die Entnahmebewegung blockiert. Insbesondere bei normalen Abgabebehälter, wie Spendern, die einen Boden sowie ein zylindrisches oder auch kubisches Gehäuse aufweisen und eine Behälteroberseite, die dann die Öffnung z. B. zur Aufnahme einer Pumpe aufweist, kann vorgesehen sein, dass der Riegel in den Bereich oberhalb der Oberseite einschwenkt, so dass bei einem unerwünschten Entnahmeversuch die Oberseite gegen den Riegel zu liegen kommt und der Abgabebehälter nicht am Riegel vorbeigezogen werden kann und der Abgabebehälter so im Gehäuse verbleibt.

Besonders vorteilhaft ist dabei, dass der Riegel nicht direkt mit dem Abgabebehälter in Kontakt treten muss, um eine Sperrstellung zu realisieren. Auf diese Weise ist es nicht notwendig, eine genaue Anpassung der Sicherungseinrichtung an den jeweiligen Abgabebehälter bereitzustellen, was im Gegenzug bedeutet, dass Behälteraufnahmevorrichtungen bereitgestellt werden können, die für verschiedene Abgabebehälter eingesetzt werden können. Darüber hinaus ist die Vorrichtung einfach aufgebaut und kann vorzugsweise als Kunststoffspritzgussteil realisiert sein.

Nach einer besonders bevorzugten Ausführungsform kann die Riegelplatte dabei im Gehäuseinneren, insbesondere im Bereich einer rückseitigen Seitenwand, geführt sein. Auf diese Weise ist die Riegelplatte von außen nicht sichtbar und insbesondere bei Führung der Riegelplatte im Bereich der rückseitigen Seitenwand in der üblichen Aufstellposition der Behälteraufnahmevorrichtung ist die Riegelplatte kaum zu erkennen, so dass eine unerwünschte Betätigung der Sicherungseinrichtung des Abgabebehälters vermieden wird, ohne dass Schlüssel oder ähnliches vorgesehen werden müssen.

Vorzugsweise ist es dabei vorgesehen, dass die Riegelplatte ein Betätigungsmittel aufweist, welches eine Seitenwand oder den Boden des Gehäuses durchgreift und durch einen Benutzer ergreifbar und bewegbar ist und die Bewegung auf die Riegelplatte überträgt. Alternativ sind auch andere Betätigungsmittel denkbar, die z.B. nur zum Betätigen mit der Riegelplatte zusammenwirken und ansonsten nicht mit dieser im Eingriff sind. Das Betätigungsmittel kann dabei insbesondere starr mit der Riegelplatte verbunden oder Teil derselben sein. Insbesondere, wenn das Betätigungsmittel im Bereich des Gehäusebodens oder der Rückwand vorgesehen ist, bietet sich der Vorteil, dass das Betätigungsmittel nicht unmittelbar sichtbar ist. Insbesondere kann vorgesehen sein, dass das Betätigungsmittel nicht wesentlich über das Gehäuse oder, sofern vorgesehen, eine damit verbundene Tropfschale hinausragt und insbesondere hierin aufgenommen und verborgen ist. Auf diese Weise ist eine geschützte Anordnung möglich bei gleichzeitig einfacher Betätigbarkeit der Sicherungseinrichtung.

Weiterhin besonders bevorzugt ist, wenn die Riegelplatte eine in das Behälterinnere weisende Abkantung aufweist, auf der ein in das Gehäuse aufgenommener Abgabebehälter zu stehen kommt. Auf diese Weise wird bei einer linear vertikalen Bewegung der Riegelplatte zugleich erreicht, dass der Abgabebehälter linear nach oben bewegt wird und so in eine Position gelangt, in der er einfacher bei einer Entnahme nach vertikal oben durch eine mit dem Austausch betraute Person entnehmbar ist. Gleichzeitig kann durch die vertikale Bewegung des Abgabebehälters die Verschwenkbewegung des Riegels initiiert werden. Alternativ ist es auch möglich, an der Riegelplatte ein Element vorzusehen, das die vertikale Bewegung der Riegelplatte in eine rotatorische Bewegung des Riegels umsetzt.

Der Riegel ist dabei vorzugsweise um eine insbesondere horizontale Achse am Gehäuse schwenkbar gelagert. Auf diese Weise kann er besonders einfach durch die Riegelplatte bewegt werden. Dabei kann weiterhin vorgesehen sein, dass der Riegel erste Anschlagmittel aufweist, mit denen er in der Sperrstellung gegen die Riegelplatte oder das Gehäuse anliegt und so der Riegel in der Sperrstellung fixiert ist.

Darüber hinaus kann weiterhin vorgesehen sein, dass das Gehäuse und/oder die Riegelplatte eine Öffnung aufweisen, die die ersten Anschlagmittel des Riegels in der Freigabestellung durchgreifen, so dass die Bewegung des Riegels freigegeben ist.

Dabei kann vorgesehen sein, dass die ersten Anschlagmittel nur dann die Öffnung in der Riegelplatte sowie dem Gehäuse durchgreifen, wenn die Riegelplatte in einer vertikal nach oben verschobenen Endposition angeordnet ist und so eine Öffnung in der Riegelplatte mit einer Öffnung im Gehäuse in Überdeckung gebracht wird.

Weiterhin kann in einer bevorzugten Ausführungsform vorgesehen sein, dass die Riegelplatte und/oder der Riegel einen Anschlag aufweist, der das Herausbewegen des Riegels aus dem Bereich eines aufgenommenen Auffangbehälters begrenzt. Durch die Begrenzung der Verschwenkbewegung des Riegels in seinen Endlagen kann erreicht werden, dass die Bewegung des Riegels in jedem Fall möglich wird, da in den Endlagen von annähernd 180°, d.h. parallel zur Riegelplatte, die Gefahr besteht, dass eine insbesondere schwerkraftinduzierte Bewegung nicht länger möglich ist.

Weiterhin kann die Riegelplatte Mittel aufweisen, die die Verschwenkbewegung des Riegels einleiten und führen.

Es kann vorgesehen sein, dass die Riegelplatte durch die Schwerkraft oder durch eine Federkraft von der Freigabestellung in die Sperrstellung überführt wird.

Dabei ist es besonders bevorzugt, wenn die Sperrstellung automatisch eingenommen wird, sofern die Betätigungseinrichtung der Sicherungseinrichtung nicht betätigt wird. Auf diese Weise kann erreicht werden, dass in jedem Fall bei aufgenommenem Abgabebehälter eine Sicherungseinrichtung eingreift und diesen gegen unerwünschte Entnahme sichert.

Besonders ist weiter bevorzugt, wenn eine die Vorderseite des Gehäuses bildende Seitenwand, also eine Seitenwand, die bei üblichem Gebrauch einem Benutzer des Abgabebehälters zugewandt ist, mit einer Öffnung, insbesondere mit einem Sichtfenster versehen ist. Durch diese Öffnung kann dann ein Etikett oder Schild auf dem Abgabebehälter sichtbar gemacht werden und darüber hinaus ist so auch eine Füllstandkontrolle ermöglicht.

Weiterhin besonders bevorzugt ist dabei, dass eine Tropfschale mit dem Boden und/oder den Seitenwänden des Gehäuses verbindbar ist, insbesondere lösbar verrastbar ist. Dabei kann insbesondere vorgesehen sein, dass nur bei betätigtem Betätigungsmittel die Tropfschale von dem Gehäuse lösbar ist. Dabei kann vorgesehen sein, dass die Tropfschale Rastelemente aufweist, die gegen entsprechende Flächen des Gehäuses, insbesondere des Gehäusebodens anliegen, z. B. den Boden hierzu durchgreifen, wobei durch Verschieben in horizontaler Richtung die Rastmittel außer Eingriff mit den korrespondierenden Flächen des Gehäuses bringbar sind. Die horizontale Verschiebung der Tropfschale ist vorzugsweise nur bei betätigtem Betätigungsmittel möglich. Um dies zu gewährleisten, kann insbesondere vorgesehen sein, dass das Betätigungsmittel auch eine Aussparung in der Tropfschale durchgreift und außer Eingriff mit der Tropfschale gebracht ist, wenn es betätigt wird, so dass dann eine Verschiebung der Tropfschale möglich ist.

Auf diese Weise wird erreicht, dass die Tropfschale separat gereinigt werden kann und insbesondere nur dann gereinigt und abgenommen wird, wenn gleichzeitig auch der Abgabebehälter entnommen wird. Die Gefahr einer Verschmutzung des Bodens oder von Oberflächen durch Flüssigkeit, die aus dem Abgabebehälter unerwünscht austritt, wird dadurch weiter verringert.

Die Tropfschale kann dabei im mit dem Gehäuse verbundenen Zustand als Standfuß der Behälteraufnahmevorrichtung dienen.

Schließlich ist bevorzugt vorgesehen, dass die Behälteraufnahmevorrichtung als Kunststoffteil vorzugsweise aus Spritzgussteilen aufgebaut ist, so dass eine einfache und kostengünstige Bereitstellung erreicht werden kann.

Weiterhin kann vorgesehen sein, dass das Gehäuse und die Abmessungen des Riegels so bemessen sind, dass der Abgabebehälter nicht an der Sicherungseinrichtung vorbei aus dem Gehäuse herausgezogen werden kann. Unter einer Abmessung ist dabei eine Erstreckung in einer Querschnittsebene des Abgabebehälters gemeint. Insbesondere kann eine Anpassung des Gehäuses an die Form des Abgabebehälters erfolgen. Dabei kann die Anpassung jedoch so gestaltet sein, dass verschiedene Abgabebehälter in eine Behälteraufnahmeeinrichtung aufgenommen werden können. Es können jedoch auch z.B. zylindrische Abgabebehälter in kubische Gehäuse aufgenommen werden.

In einer weiteren Ausführungsform kann der Deckel verschwenkbar am Gehäuse angelenkt sein, vorzugsweise um eine horizontale Achse. Dabei kann der Deckel weiter vorzugsweise auf seiner in Richtung auf das Gehäuseinnere weisenden Seite Zentriermittel, insbesondere Zentrierrippen aufweisen, die die Stellung eines aufgenommenen Abgabebehälters im Gehäuse festlegen.

Insbesondere kann eine Abgabeeinrichtung eines Spenders in Ausnehmungen an der Deckelunterseite, insbesondere in den Zentriermitteln, aufgenommen und bezüglich ihrer Lage hierdurch fixiert werden. Auf diese Weise wird erreicht, dass eine Fehlbefüllung der Behälteraufnahmevorrichtung sicher verhindert werden kann, so dass möglicherweise heruntertropfende Flüssigkeit in eine Tropfschale (sofern vorgesehen) aufgenommen wird.

Insbesondere kann dabei weiter vorgesehen sein, dass der Deckel als Betätigungselement eines als Spender ausgebildeten Abgabebehälters dient. D.h., durch Bewegen, also Verschwenken des Deckels, um seine Schwenkachse wird eine Pumpe des Abgabebehälters betätigt, so dass eine vorgegebene Menge Flüssigkeit aus dem Abgabebehälter entnommen werden kann.

Ferner kann insbesondere vorgesehen sein, dass die Behälteraufnahmevorrichtung als Standgerät ausgebildet ist. Alternativ oder zusätzlich kann sie auch an eine Wand oder Konsole montierbar sein, beispielsweise mittels Schrauben oder Nägeln, die in Öffnungen der Behälteraufnahmevorrichtung eingreifen, die im Gehäuse vorgesehen sind oder mittels Klebepads, die zwischen Wand und Behälteraufnahmevorrichtung angebracht werden.

Weitere Vorteile und Merkmale der Erfindung ergeben sich aus den übrigen Anmeldeunterlagen sowie der nachfolgenden Figurenbeschreibung.

Dabei zeigen:
- Figur 1: eine perspektivische Darstellung einer erfindungsgemäßen Behälteraufnahmevorrichtung;
- Figur 2: eine Behälteraufnahmevorrichtung gemäß Figur 1 mit Tropfschale im Schnitt;
- Figur 3: eine Behälteraufnahmevorrichtung gemäß Figur 2 ohne Aufnahmebehälter im Schnitt;
- Figur 4: eine perspektivische Darstellung der Behälteraufnahmevorrichtung gemäß Figur 3;
- Figur 5: eine Darstellung einer Behälteraufnahmevorrichtung ohne Aufnahmebehälter mit Sicherungseinrichtung in der Freigabestellung und
- Figur 6: eine perspektivische Darstellung gemäß Figur 5.

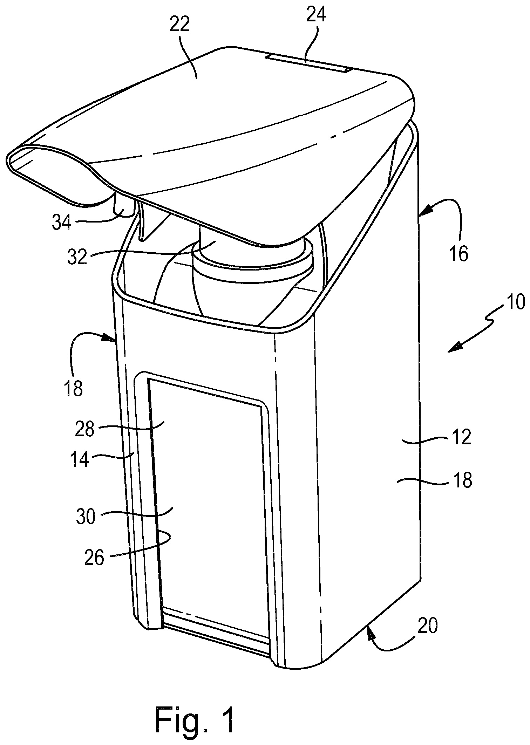

Figur 1 zeigt eine Behälteraufnahmevorrichtung, die in ihrer Gesamtheit mit dem Bezugszeichen 10 versehen ist. Diese umfasst ein Gehäuse 12 mit vier Seitenwänden und insbesondere in einer Gebrauchsposition einer Vorderseite 14 sowie einer rückwärtigen Seitenwand 16 und zwei verbleibenden Seitenwänden 18. Darüber hinaus umfasst das Gehäuse einen Boden 20 und darüber hinaus weist die Behälteraufnahmevorrichtung 10 einen Deckel 22 auf, der mit dem im vorliegenden Fall einstückigen Gehäuse beweglich verbunden ist. Insbesondere ist auf der rückseitigen Seite des Deckels 22 ein Scharnier 24 vorgesehen, über das der Deckel mit der rückwärtigen Seitenwand 16 verbunden ist. An der Vorderseite weist das Gehäuse eine bis zum Boden 20 gehende Öffnung 26 auf, durch die ein im Gehäuse 12 aufgenommener Abgabebehälter 28, insbesondere ein Spender, beispielsweise für Desinfektionsmittel, gesehen werden kann, so dass eine Füllstandkontrolle sowie ein Ablesen eines Etiketts (nicht dargestellt) möglich ist. Das Gehäuse 12 weist dabei einen im Wesentlichen rechteckigen Querschnitt mit abgerundeten Kanten auf, der im Wesentlichen der Form des Abgabebehälters 28 angepasst ist. Dabei kann die Behälteraufnahmevorrichtung so gestaltet sein, dass Abgabebehälter 28 verschiedener Hersteller und Marken in den Behälteraufnahmevorrichtungen 10 aufgenommen werden können. Als Abgabebehälter ist hier ein handelsüblicher Desinfektionsmittelspender zur Händedesinfektion vorgesehen, umfassend einen Vorratsbehälter 30 sowie eine Pumpe 32 mit einer Abgabeeinrichtung 34. Durch Druck auf den Deckel 22 wird dieser um das Gelenk 24 verschwenkt und drückt so auf die Abgabeeinrichtung 34, so dass die Pumpe 32 betätigt wird und eine definierte Menge Flüssigkeit aus dem Vorratsbehälter 30 gefördert und abgegeben wird.

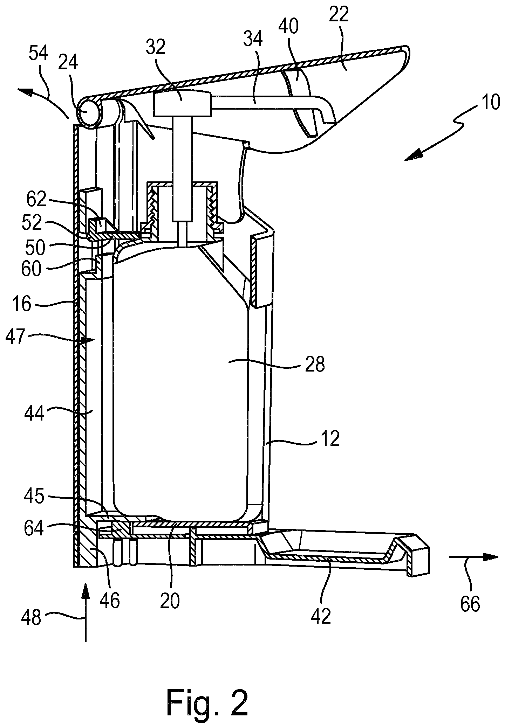

Figur 2 zeigt die Behälteraufnahmevorrichtung 10 nun in einer Schnittdarstellung, wobei zu erkennen ist, dass im Deckel 22 Zentrierrippen 40 vorgesehen sind, in denen die Ausgabeeinrichtung 34 des Spenders 32 geführt ist, so dass die Ausgabeeinrichtung 34 so zentriert ist, dass sie über eine hier vorgesehene Tropfschale 42 zu liegen kommt. Darüber hinaus werden Fehler beim Einbringen des Abgabebehälters 28 verhindert.

Im Bereich der rückwärtigen Seitenwand 16 ist eine Riegelplatte 44 als Teil einer Sicherungseinrichtung 47 vorgesehen, die ebenfalls wie die gesamte Behälteraufnahmevorrichtung 10 als Spritzgussteil ausgebildet sein kann. Die Riegelplatte durchgreift dabei den Gehäuseboden sowie die Tropfschale 42 und weist bündig mit dem Boden der Tropfschale 42 abschließend ein Betätigungsmittel 46 auf, durch das bei Druck in Pfeilrichtung 48 nach vertikal oben die Riegelplatte linear nach vertikal oben 48 bewegt wird. Weiterhin umfasst die Behälteraufnahmevorrichtung 10 einen Riegel 50, der verschwenkbar um eine horizontale Achse 52 am Gehäuse 12 festgelegt ist, wobei die Riegelplatte 44 bei ihrer linearen Bewegung mit dem Riegel 50 so zusammenwirkt, dass der Riegel 50 bezüglich seines freien Endes nach oben hinten in Pfeilrichtung 54 bewegt (verschwenkt) wird während der linearen Bewegung der Riegelplatte 44 nach vertikal oben (Pfeil 48).

Der Riegel 50 ist in Figur 2 in einer ersten Sperrstellung gezeigt, in der er sich im Bereich oberhalb einer Wandung eines in der Behälteraufnahmevorrichtung 10 befindlichen Abgabebehälters 28 befindet, insbesondere kann der Riegel 50 auch gegen den Abgabebehälter 28 anliegen. Durch die Anordnung des Riegels 50 im Bereich oberhalb einer Wandung des Abgabebehälters 28 wird ein vertikales Entnehmen nach oben ebenfalls in Pfeilrichtung 48 des Abgabebehälters 28 verhindert, solange sich der Riegel 50 in der Sperrstellung befindet. Wird nun durch Verschieben der Riegelplatte 44 über das Betätigungsmittel 46 die Riegelplatte 44 nach vertikal oben bewegt, so wird der Riegel 50 in Pfeilrichtung 54 nach hinten oben bezüglich seines freien Endes verschwenkt und gelangt so in eine Freigabestellung, in der er außerhalb des Bereichs des Abgabebehälters 28 zu liegen kommt. Hierzu kann die Riegelplatte 44 Mittel 60 aufweisen, die die Verschwenkbewegung des Riegels 50 einleiten. Darüber hinaus können am Riegel Anschlagmittel 62 vorgesehen sein, die eine Endlage des Riegels sowohl in der Freigabestellung als auch in der Sperrstellung definieren.

Des Weiteren ist eine Tropfschale 42 vorgesehen, wobei die Tropfschale 42 ebenfalls vom Betätigungsmittel 46 bzw. der Riegelplatte 44 durchgriffen wird und nur dann vom Gehäuse 12 getrennt werden kann, wenn das Betätigungsmittel 46 in Pfeilrichtung 48 außer Eingriff mit der Tropfschale 42 ist. Die Tropfschale 42 weist hierzu Rastelemente (mit dem Bezugszeichen 64 versehen) auf, die Öffnungen im Gehäuseboden 20 durchgreifen und dort rastend festgelegt sind. Wird das Betätigungsmittel 46 in Pfeilrichtung 48 außer Eingriff mit der Tropfschale 42 bewegt, so kann die Tropfschale in horizontaler Richtung 66 vorgezogen werden, wobei die Rastmittel 64 außer Eingriff mit dem Boden 20 kommen.

Darüber hinaus weist die Riegelplatte 44 im Bereich des Bodens 20 des Gehäuses eine Abkantung 45 auf, die sich in das Gehäuseinnere erstreckt, so dass der Abgabebehälter 28 auf der Abkantung zu stehen kommt. Wird nun das Betätigungsmittel 46 betätigt, so wird zugleich auch der Abgabebehälter 28 nach oben bewegt, so dass die Entnahme des Abgabebehälters aus dem Gehäuse 12 der Behälteraufnahmevorrichtung erleichtert ist.

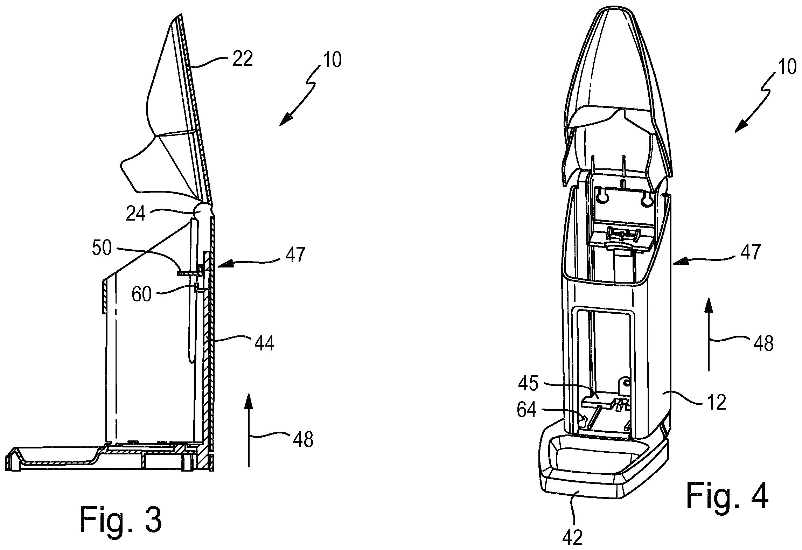

Figur 3 zeigt nun eine Gestaltung gemäß Figur 2, wobei der Aufnahmebehälter aus der Behälteraufnahmevorrichtung 10 entnommen ist. Der Deckel 22 ist um das Scharnier 24 aus seiner in Figur 2 gezeigten Position, in der Zentrierrippen 40 mit der Ausgabeeinrichtung 34 des Abgabebehälters 28 in Kontakt stehen, in eine geöffnete Position verschwenkt. Die Sicherungseinrichtung 47 befindet sich in der Sperrstellung, d.h., der Riegel 50 befindet sich im Wesentlichen in einer horizontalen Stellung und die Riegelplatte 44 befindet sich in ihrer vertikal nach unten orientierten Stellung. Gut zu sehen ist hierbei das Mittel 60, welches die Verschwenkbewegung des Riegels so einleitet, wenn eine Bewegung in Pfeilrichtung 48 der Riegelplatte 44 erfolgt und den Riegel 50 dann auch in der geöffneten Position festhält, indem ein Teil des Riegels 50 in die hakenförmige Aufnahme des Mittels 60 eintaucht.

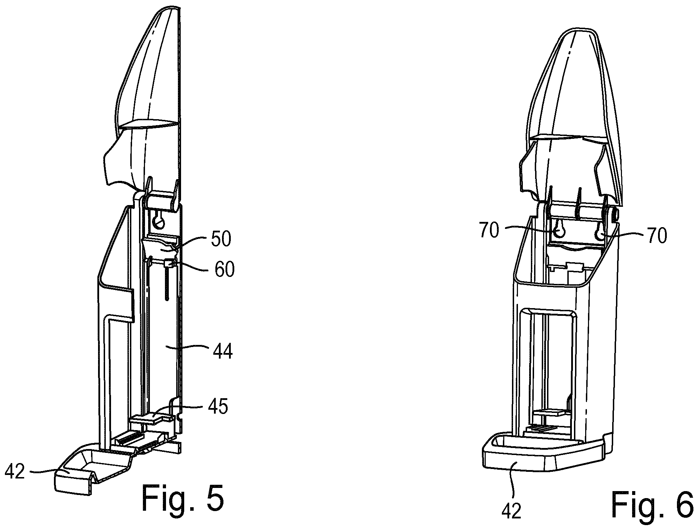

Figur 4 zeigt eine perspektivische Darstellung der Behälteraufnahmevorrichtung 10 gemäß Figur 3 ohne Abgabebehälter 28, wobei die Sicherungseinrichtung 47 auch hier in der Sperrstellung gezeigt ist. Gut zu sehen ist die Abkantung 45 der Riegelplatte 44, auf der dann der Abgabebehälter 28 zu stehen kommt und mit der Riegelplatte 44 in Pfeilrichtung 48 bewegt wird bei einem Überführen in die Freigabestellung (s. Figuren 5 und 6). Ebenfalls erkannt werden können die Rastelemente 64, die Öffnungen im Boden 20 durchgreifen und hakenförmige Köpfe aufweisen, die bei Verschieben in den Öffnungen bei Verschieben entgegen der Pfeilrichtung 66 in Figur 2 mit dem Boden zusammenwirken aufgrund der Form der Öffnungen und so zu einem Verrasten der Tropfschale 42 am Gehäuse 12 führen.

Die Figuren 5 und 6 zeigen nun die Behälteraufnahmevorrichtung in einer Freigabestellung, in der der Riegel 50 in Pfeilrichtung 54 gemäß Figur 2 verschwenkt ist, so dass der Riegel 50 in das Mittel 60 eintaucht. Ebenfalls ist zu erkennen, dass die Abkantung 45 gegenüber der Darstellung in Figuren 3 und 4 nach vertikal oben verschoben ist. Der Riegel 50 gibt nun einen Bereich oberhalb eines Abgabebehälters (nicht dargestellt) frei, so dass der Abgabebehälter 28 am Riegel 50 vorbeigezogen werden kann. Dabei erleichtert die nach vertikal oben verschobene Stellung des Abgabebehälters 28 aufgrund der Abkantung 45 die Entnahme.

Außerdem ist in dieser Stellung die Riegelplatte 44 außer Eingriff mit der Tropfschale 42, so dass grundsätzlich eine horizontale Verschiebung der Tropfschale in Richtung 66 gemäß Figur 2 möglich ist und so eine Entfernung der Tropfschale beispielsweise zu Reinigungszwecken vorgenommen werden kann.

Wie den Figuren 3 bis 6 entnommen werden kann, weist das Gehäuse darüber hinaus Öffnungen 70 an der rückwärtigen Seitenwand 6 auf, über die eine Wandmontage bereitgestellt werden kann. In diese Öffnungen 70 können wandseitig vorgesehene Befestigungsmittel, wie Nägel oder Schrauben, eingreifen. Alternativ kann z. B. die Tropfschale 42 als Standfuß dienen.

## Patentansprüche

1. Behälteraufnahmevorrichtung (10) für einen Abgabebehälter (28), wie insbesondere Spender für flüssige Medien, mit einem Gehäuse (12) umfassend vier Seitenwände (14, 16, 18) und einen Gehäuseboden (20) zur Aufnahme des Abgabebehälters (28) sowie einem Gehäusedeckel (22), mit einer Sicherungseinrichtung (47) für den Abgabebehälter (28), wobei die Sicherungseinrichtung (47) einen Riegel (50) umfasst, der zwischen einer Sperrstellung und einer Freigabestellung bewegbar ist, wobei der Riegel (50) in der Sperrstellung in einen Bereich oberhalb einer Wandung eines in der Behälteraufnahmevorrichtung (10) befindlichen Abgabebehälters (25) hineinbewegt ist, so dass der Abgabebehälter (28) gegen Entnehmen aus der Behälteraufnahmevorrichtung (10) gesichert ist und in der Freigabestellung aus dem Bereich heraus verschwenkt ist, **dadurch gekennzeichnet, dass** die Sicherungseinrichtung (47) eine Betätigungseinrichtung für den Riegel umfasst, die durch eine an einer der Seitenwände (16) geführte zwischen zwei Endlagen vertikal linear bewegliche Riegelplatte (44), die in einer ersten Endlage den Riegel (50) in eine Sperrstellung und einer zweiten Endlage den Riegel (50) in eine Freigabestellung bewegt, gebildet ist.

2. Behälteraufnahmevorrichtung nach Anspruch 1, **dadurch gekennzeichnet, dass** die Riegelplatte (44) im Gehäuseinneren, insbesondere im Bereich einer rückseitigen Seitenwand (16) geführt ist.

3. Behälteraufnahmevorrichtung nach Anspruch 1 oder 2, **dadurch gekennzeichnet, dass** eine Tropfschale (42) mit dem Boden (20) und/oder den Seitenwänden des Gehäuses (12) verbindbar, insbesondere lösbar verrastbar ist.

4. Behälteraufnahmevorrichtung nach einem oder mehreren der vorangehenden Ansprüche 1 bis 3, **dadurch gekennzeichnet, dass** die Betätigungseinrichtung, insbesondere die Riegelplatte (44) ein Betätigungsmittel (46) aufweist, das eine Seitenwand oder den Boden (20) des Gehäuses (12) durchgreift und durch einen Benutzer insbesondere linear bewegbar ist.

5. Behälteraufnahmevorrichtung nach Anspruch 4, **dadurch gekennzeichnet, dass** das Betätigungsmittel (46) nicht über das Gehäuse (12) und/oder die Tropfschale (42) hinausragt.

6. Behälteraufnahmevorrichtung nach Anspruch 4 oder 5, **dadurch gekennzeichnet, dass** die Tropfschale (42) nur bei betätigtem Betätigungsmittel (46) von dem Gehäuse (12) lösbar ist.

7. Behälteraufnahmevorrichtung nach einem oder mehreren der vorangehenden Ansprüche 3 bis 6, **dadurch gekennzeichnet, dass** die Tropfschale (42) einen Standfuß der Behälteraufnahmevorrichtung (10) bildet.

8. Behälteraufnahmevorrichtung nach einem oder mehreren der vorangehenden Ansprüche, **dadurch gekennzeichnet, dass** die Riegelplatte (44) eine in das Behälterinnere weisende Abkantung (45) aufweist, auf der ein in das Gehäuse (12) aufgenommener Abgabebehälter (28) zu stehen kommt, so dass der Abgabebehälter (28) mit der Riegelplatte (44) bewegbar ist.

9. Behälteraufnahmevorrichtung nach einem oder mehreren der vorangehenden Ansprüche, **dadurch gekennzeichnet, dass** der Riegel (50) um eine insbesondere horizontale Achse (52) am Gehäuse (12) verschwenkbar gelagert ist.

10. Behälteraufnahmevorrichtung nach einem oder mehreren der vorangehenden Ansprüche, **dadurch gekennzeichnet, dass** der Riegel (50) ein erstes Anschlagmittel aufweist, mit dem er in der Sperrstellung gegen die Riegelplatte (54) oder das Gehäuse (12) anliegt.

11. Behälteraufnahmevorrichtung nach Anspruch 10, **dadurch gekennzeichnet, dass** das Gehäuse (12) und/oder die Riegelplatte (44) eine Öffnung aufweisen, die das erste Anschlagmittel in der Freigabestellung durchgreift, so dass die Bewegung des Riegels (50) freigegeben ist.

12. Behälteraufnahmevorrichtung nach einem oder mehreren der vorangehenden Ansprüche, **dadurch gekennzeichnet, dass** die Riegelplatte (44) und/oder der Riegel (50) einen Anschlag aufweist, der das Herausbewegen des Riegels (50) aus dem Bereich eines aufgenommenen Abgabebehälters (28) begrenzt.

13. Behälteraufnahmevorrichtung nach einem oder mehreren der vorangehenden Ansprüche, **dadurch gekennzeichnet, dass** die Riegelplatte (44) und/oder der Riegel (50) einen Anschlag aufweist, der die Bewegung des Riegels (50) in der Sperrposition in Richtung auf den Behälterboden (20), insbesondere bei nicht aufgenommenem Abgabebehälter (28) begrenzt.

14. Behälteraufnahmevorrichtung nach einem oder mehreren der vorangehenden Ansprüche, **dadurch gekennzeichnet, dass** der Riegel (50) und/oder die Riegelplatte (44) durch die Schwerkraft und/oder durch eine Federkraft von der Freigabestellung in die Sperrstellung des Riegels (50) überführbar ist.

15. Behälteraufnahmevorrichtung nach einem der vorangehenden Ansprüche, **dadurch gekennzeichnet, dass** der Deckel (22) verschwenkbar am Gehäuse (12) angelenkt ist.

16. Behälteraufnahmevorrichtung nach einem oder mehreren der vorangehenden Ansprüche, **dadurch gekennzeichnet, dass** der Deckel (22) als Betätigungselement eines als Spenders ausgebildeten Abgabebehälters (28) dient.

## Claims

1. A container receiving device (10) for a dispensing container (28), such as in particular dispensers for liquid media, comprising a housing (12) comprising four side walls (14, 16, 18) and a housing bottom (20) for receiving the dispensing container (28) and a housing lid (22) with a securing device (47) for the dispensing container (28), wherein the securing device (47) comprises a latch (50) which is movable between a locking position and a release position, with the latch (50) in the locking position being moved into a region above a wall of a dispensing container (25) located in the container receiving device (10) so that the dispensing container (28) is secured against removal from the container receiving device (10) and in the release position is moved, in particular pivoted out of the region, **characterized in that** the securing device (47) comprises an actuating device for the latch, consisting of a linearly movable latch plate (44) extending vertically on one of the side walls (16) between two limit positions, which in a first limit position moves the latch (50) into a locking position and in a second limit position moves the latch (50) into a release position.

2. The container receiving device according to claim 1, **characterized in that** the locking plate (44) extends in the interior of the housing, in particular in the region of a rear side wall (16).

3. The container receiving device according to claim 1 or 2, **characterized in that** a drip tray (42) is connectable to the bottom (20) and/or the side walls of the housing (12), in particular detachably interlockable.

4. The container receiving device according to one or more of the preceding claims 1 to 3, **characterized in that** the actuating device, in particular the latch plate (44), comprises an actuating device (46) passing through a side wall or the bottom (20) of the housing (12) and being in particular linearly movable by a user.

5. The container receiving device according to claim 4, **characterized in that** the actuating device (46) does not extend beyond the housing (12) and/or the drip tray (42).

6. The container receiving device according to claim 4 or 5, **characterized in that** the drip tray (42) is only detachable from the housing (12) when the actuating means (46) is actuated.

7. The container receiving device according to one or more of the preceding claims 3 to 6, **characterized in that** the drip tray (42) forms a base of the container receiving device (10).

8. The container receiving device according to one or more of the preceding claims, **characterized in that** the latch plate (44) has an angled section (45) pointing into the interior of the container, on which a dispensing container (28) inserted into the housing (12) comes to rest, so that the dispensing container (28) is movable with the latch plate (44).

9. The container receiving device according to one or more of the preceding claims, **characterized in that** the latch (50) is mounted on the housing (12) pivotable in particular about a horizontal axis (52).

10. The container receiving device according to one or more of the preceding claims, **characterized in that** the latch (50) has a first abutment means, with which it abuts against the latch plate (54) or the housing (12) in the locking position.

11. The container receiving device according to claim 10, **characterized in that** the housing (12) and/or the latch plate (44) have an opening which engages through the first abutment means in the release position, so that movement of the latch (50) is enabled.

12. The container receiving device according to one or more of the preceding claims, **characterized in that** the latch plate (44) and/or the latch (50) has a stop which limits the movement of the latch (50) out of the region of a received dispensing container (28).

13. The container receiving device according to one or more of the preceding claims, **characterized in that** the latch plate (44) and/or the latch (50) has a stop, which limits the movement of the latch (50) in the locking position in the direction of the bottom of the container (20), in particular when no dispensing container (28) has been received.

14. The container receiving device according to one or more of the preceding claims, **characterized in that** the latch (50) and/or the latch plate (44) is transferable from the release position into the locking position of the latch (50) by gravity and/or by a spring force.

15. The container receiving device according to one of the preceding claims, **characterized in that** the lid (22) is pivotably articulated on the housing (12).

16. The container receiving device according to one or more of the preceding claims, **characterized in that** the lid (22) serves as an actuating element of a dispensing container (28) configured as a dispenser.

## Revendications

1. Dispositif de réception de récipient (10) pour un récipient de distribution (28), comme en particulier un distributeur de milieux liquides, avec un boîtier (12) comprenant quatre parois latérales (14, 16, 18) et un fond de boîtier (20) pour recevoir le récipient de distribution (28) ainsi qu'un couvercle de boîtier (22), avec un dispositif de sécurité (47) pour le récipient de distribution (28), dans lequel le dispositif de sécurité (47) comprend un verrou (50) qui peut être déplacé entre une position de blocage et une position de libération, dans lequel le verrou (50) est déplacé dans la position de blocage dans une zone au-dessus d'une paroi d'un récipient de distribution (25) se trouvant dans le dispositif de réception de récipient (10), de sorte que le récipient de distribution (28) est protégé contre le retrait du dispositif de réception de récipient (10) et est amené à pivoter hors de la zone dans la position de libération, **caractérisé en ce que** le dispositif de sécurité (47) comprend un dispositif d'actionnement pour le verrou, qui est formé par une plaque de verrouillage (44) guidée sur une des parois latérales (16) et mobile linéairement verticalement entre deux situations d'extrémité, qui dans une première situation d'extrémité déplace le verrou (50) dans une position de blocage et une deuxième situation d'extrémité le verrou (50) dans une position de libération.

2. Dispositif de réception de récipient selon la revendication 1, **caractérisé en ce que** la plaque de verrouillage (44) est guidée à l'intérieur du boîtier, en particulier dans la zone d'une paroi latérale arrière (16).

3. Dispositif de réception de récipient selon la revendication 1 ou 2, **caractérisé en ce qu'**une cuvette d'égouttage (42) peut être reliée au fond (20) et/ou aux parois latérales du boîtier (12), en particulier peut être encliquetée de manière libérable.

4. Dispositif de réception de récipient selon une ou plusieurs des revendications précédentes 1 à 3, **caractérisé en ce que** le dispositif d'actionnement, en particulier la plaque de verrouillage (44), présente un moyen d'actionnement (46), qui traverse une paroi latérale ou le fond (20) du boîtier (12) et peut être déplacé, en particulier linéairement, par un utilisateur.

5. Dispositif de réception de récipient selon la revendication 4, **caractérisé en ce que** le moyen d'actionnement (46) ne dépasse pas du boîtier (12) et/ou de la cuvette d'égouttage (42).

6. Dispositif de réception de récipient selon la revendication 4 ou 5, **caractérisé en ce que** la cuvette d'égouttage (42) ne peut être détachée du boîtier (12) que lorsque le moyen d'actionnement (46) est actionné.

7. Dispositif de réception de récipient selon l'une ou plusieurs des revendications précédentes 3 à 6, **caractérisé en ce que** la cuvette d'égouttage (42) forme une coulée en sable du dispositif de réception de récipient (10).

8. Dispositif de réception de récipient selon l'une ou plusieurs des revendications précédentes, **caractérisé en ce que** la plaque de verrouillage (44) présente un chanfrein (45) orienté vers l'intérieur du récipient, sur lequel vient se placer un récipient de distribution (28) reçu dans le boîtier (12), de sorte que le récipient de distribution (28) peut être déplacé avec la plaque de verrouillage (44).

9. Dispositif de réception de récipient selon une ou plusieurs des revendications précédentes, **caractérisé en ce que** le verrou (50) est monté sur le boîtier (12) de manière à pouvoir pivoter autour d'un axe (52) en particulier horizontal.

10. Dispositif de réception de récipient selon l'une ou plusieurs des revendications précédentes, **caractérisé en ce que** le verrou (50) présente un premier moyen de butée avec lequel il vient en appui contre la plaque de verrouillage (54) ou le boîtier (12) dans la position de blocage.

11. Dispositif de réception de récipient selon la revendication 10, **caractérisé en ce que** le boîtier (12) et/ou la plaque de verrouillage (44) présentent une ouverture qui traverse le premier moyen de butée dans la position de libération, de sorte que le mouvement du verrou (50) est libéré.

12. Dispositif de réception de récipient selon l'une ou plusieurs des revendications précédentes, **caractérisé en ce que** la plaque de verrouillage (44) et/ou le verrou (50) présente une butée qui limite le déplacement du verrou (50) hors de la zone d'un récipient de distribution (28) reçu.

13. Dispositif de réception de récipient selon l'une ou plusieurs des revendications précédentes, **caractérisé en ce que** la plaque de verrouillage (44) et/ou le verrou (50) présente une butée qui limite le déplacement du verrou (50) dans la position de blocage en direction du fond du récipient (20), en particulier lorsque le récipient de distribution (28) n'est pas reçu.

14. Dispositif de réception de récipient selon une ou plusieurs des revendications précédentes, **caractérisé en ce que** le verrou (50) et/ou la plaque de verrouillage (44) peuvent être transférés de la position de libération à la position de blocage du verrou (50) par la force de gravité et/ou par une force élastique.

15. Dispositif de réception de récipient selon l'une quelconque des revendications précédentes, **caractérisé en ce que** le couvercle (22) est articulé de manière pivotante sur le boîtier (12).

16. Dispositif de réception de récipient selon une ou plusieurs des revendications précédentes, **caractérisé en ce que** le couvercle (22) sert d'élément d'actionnement d'un récipient de distribution (28) conçu comme un distributeur.
